# EUROPÄISCHE PATENTSCHRIFT

(11) **EP 4 034 308 B1**
(45) Veröffentlichungstag und Bekanntmachung des Hinweises auf die Patenterteilung: **10.04.2024**
(21) Anmeldenummer: 20788976.7
(22) Anmeldetag: 23.09.2020
(51) Int. Cl.: B07C 5/34

(54) **SORTIERVERFAHREN**
SORTING METHOD
PROCÉDÉ DE TRI

(30) Priorität: 23.09.2019 DE 102019125464
(43) Veröffentlichungstag der Anmeldung: 03.08.2022
(73) Patentinhaber: Polysecure GmbH, 79111 Freiburg (DE)
(72) Erfinder: MÖßLEIN, Jochen, 79100 Freiburg (DE)
(74) Vertreter: Erbacher, Martin
(86) Internationale Anmeldenummer: PCT/DE2020/100822
(87) Internationale Veröffentlichungsnummer: WO 2021/058063

(56) Entgegenhaltungen:
- EP-A1- 3 502 019
- EP-A2- 0 554 850
- WO-A1-01/22072
- WO-A1-2013/163756
- WO-A1-2017/220079
- WO-A1-2019/081743
- DE-A1- 10 031 260
- US-A1- 2015 219 557
- US-A1- 2019 022 702

## Beschreibung

Die Erfindung geht aus von einem Sortierverfahren zum Sortieren einer Mischung von Materialien. Ein derartiges Verfahren ist in der EP 2 828 053 B1 beschrieben.

Die WO 2017/220079 A1 beschreibt ein Verfahren zur Identifikation von Materialien in einer zuvor genannten Mischung von Materialien mittels Lumineszenz, wobei mindestens eine lumineszierende Substanz in das Material eingebracht und/oder auf das Material aufgebracht werden kann. Das Lumineszenzverhalten der Substanz wird nach Anregung mittels Strahlung analysiert und kann dazu verwendet werden, das Material zu identifizieren, etwa zum Zwecke der Sortierung, des Recyclings und/oder für eine anderweitige Authentifizierung bzw. Qualitätskontrolle. Die lumineszierende Substanz kann beispielsweise eine fluoreszierende Verbindung aufweisen, die Anti-Stokes-Kristalle bzw. Anti-Stokes-Pigmente umfasst. Mit Hilfe der bekannten Technologien ist es möglich, einem Objekt durch Beimischung oder durch Aufbringen der zuvor genannten lumineszierenden Materialien einen individuellen Fingerabdruck zu verleihen, sodass durch Analyse des Lumineszenzverhaltens ein Objekt eindeutig identifizierbar ist.

Weltweit wächst der Bedarf, Materialien der Kreislaufwirtschaft zuzuführen. Hierzu müssen die Materialien identifiziert und sortenrein getrennt werden. Die sortenreine Trennung ist für eine hochwertige Wiederverwertung der Materialien entscheidend, da die Materialzusammensetzung die Verarbeitungs- und Leistungseigenschaften der Produkte bestimmt.

Jedoch befinden sich eine Vielzahl von Objekten mit sehr ähnlichen aber nicht identischen Materialeigenschaften im Markt. Beispielsweise können Objekte aus einem im Wesentlichen identischen Grundmaterial (z.B. PP) bestehen, aber je nach Einsatzzweck unterschiedliche Additive oder Struktureigenschaften enthalten. Eine Vermengung und gemeinsame Wiederverwertung solcher Objekte muss vermieden werden, da die unterschiedlichen Additive und Struktureigenschaften eine gemeinsame hochwertige Wiederverwertung auf Grund der oben genannten Beeinflussung von Herstellung und Performance verhindern. Weiterhin besteht der Bedarf, stofflich identischen Objekte entsprechend ihres Verwendungszwecks zu trennen. Beispielsweise sollten Lebensmittelverpackungen und Nicht-Lebensmittelverpackungen, die aus dem gleichen Material bestehen, sortenrein voneinander getrennt werden, da für Kunststoffe in Lebensmittelverpackungen eine höhere Güte gefordert wird. Eine weitere Herausforderung besteht in der Trennung von Verpackungen mit mehrschichtigem Aufbau von Verpackungen aus nur einer Kunststoffschicht. Ferner besteht der Wunsch, im Wesentlichen gleiche Objekte von unterschiedlichen Herstellern nach Hersteller zu sortieren, da Hersteller ein Interesse daran haben können, das von ihnen selbst in Umlauf gebrachte Material zurück zu erhalten und zu recyceln. Zusammenfassend besteht ein großer Bedarf, die enorme Vielzahl von Objekt- und Materialklassen in sortenreine Fraktionen zu trennen.

In Sortieranlagen nach dem Stand der Technik gelingt es durch Einsatz vielfältiger Verfahren (z.B. Trommelsiebung, Windsichtung, Ballistikseparation, Magnetabscheidung, Wirbelstromabscheidung und NIR (Nahinfrarot)-Detektion), die Werkstofffraktionen Aluminium, Weißblech, Papier/Pappe/Karton (PPK) und Kunststoff zu trennen. Ferner können die Kunststoffe in die Hauptpolymere HDPE (High Density Polyethylen), LDPE (Low Density Polyethylen), PP (Polypropylen), PS (Polystyrol), PET (Polyethylentherephthalat) und PVC (Polyvinylchlorid) aufgetrennt werden. Eine weitergehende Sortierung entsprechend den oben geschilderten Anforderungen ist jedoch nicht möglich.

US 2015/0219557 A offenbart ein Verfahren für eine Materialklassifizierung eines Objekts. Es wird auf Parameter zur Klassifizierung zugegriffen. Zu den Parametern gehören eine Auswahl zur Auswahl einer Teilmenge von Winkeln zur Klassifizierung, eine Auswahl zur Auswahl einer Teilmenge von Spektralbändern zur Klassifizierung, eine Auswahl zur Erfassung von Texturmerkmalen und eine Auswahl zur Berechnung von Merkmalen auf Bildebene. Das Objekt wird beleuchtet und anhand der Parameter wird ein Merkmalsvektor berechnet. Das Material, aus dem das Objekt gefertigt ist, wird anhand des Merkmalsvektors klassifiziert.

Es ist daher die Aufgabe der Erfindung, ein Sortierverfahren der eingangs beschriebenen Art derart weiterzuentwickeln, dass es eine weitergehende Sortierung anhand zusätzlicher Kriterien erlaubt.

Diese Aufgabe wird durch ein Sortierverfahren mit den Merkmalen des Anspruchs 1 gelöst. Die abhängigen Ansprüche betreffen jeweils vorteilhafte Ausführungsformen der Erfindung.

Demgemäß ist bei einem Sortierverfahren vorgesehen, dass es die Schritte aufweist:
a. optional, Bereitstellen einer Vielzahl von Objekten;
b. Vereinzeln der Objekte;
c. Analysieren der vereinzelten Objekte, wobei für die Objekte jeweils mindestens eine Materialeigenschaft erfasst wird;
d. Abgleichen der erfassten Materialeigenschaft(en) mit in einer Datenbank hinterlegten Referenzmaterialeigenschaften, denen jeweils eine Zieladresse zugeordnet ist und Erfassen einer Fraktionszugehörigkeit der Objekte; und
e. Sortieren der vereinzelten Objekte entsprechend der ihrer erfassten Materialeigenschaft über eine der Referenzmaterialeigenschaften in der Datenbank zugeordneten Zieladresse;
dadurch gekennzeichnet, dass das Analysieren, das Abgleichen und das Sortieren der vereinzelten Objekte mehrfach erfolgt, wobei in einem ersten Analyseschritt mindestens eine erste Materialeigenschaft und in mindestens einem weiteren Analyseschritt mindestens eine weitere der Materialeigenschaften erfasst wird, wobei nach dem ersten Analyseschritt und einem ersten Abgleichschritt ein erster Teil der Zieladresse und nach dem mindestens einen weiteren Analyseschritt und dem mindestens einen weiteren Abgleichschritt mindestens ein weiterer Teil der Zieladresse zugewiesen wird, und wobei das Objekt nach dem Durchlaufen sämtlicher Analyseschritte und Abgleichschritte sowie nach der Zuweisung aller Teile der Zieladresse der Zieladresse zugeführt wird.

Das Analysieren kann das Erfassen einer auf das Objekt aufgebrachten und/oder in das Objekt eingebrachten Materialeigenschaft aufweisen, etwa das Erfassen eines Fluoreszenzcodes und/oder eines Wasserzeichens und/oder eines Barcodes und/oder eines QR-Codes und/oder eines Symbols und/oder einer Artikelnummer und/oder das Erfassen einer nativen Materialeigenschaft des Objekts aufweisen, etwa einer chemischen Materialzusammensetzung des Objekts und/oder einer Farbe und/oder einer Form des Objekts.

So kann beispielsweise das spektroskopisch analysierbare Lumineszenzspektrum eines Objektes eine eindeutige Charakteristik aufweisen, die es ermöglicht, etwa durch Zuordnung einer in einer Datenbank hinterlegten Zieladresse das Objekt einem eindeutigen Sortierziel zuzuführen, etwa um es dem Hersteller des betreffenden Objektes zu Recyclingzwecken wieder zur Verfügung zu stellen. Eine Individualisierung des spektroskopisch analysierbaren emittierten Spektrums kann durch Aufbringen oder Beimengen eines lumineszierenden Markers, wie er beispielsweise in der EP 2 828 053 B1 beschrieben ist, erfolgen, um die Unterscheidbarkeit einzelner Objekte innerhalb der pulkförmig bereitgestellten Vielzahl von Objekten weiter zu erhöhen.

Das Analysieren kann das spektroskopische Analysieren aufweisen, bei dem der Lumineszenzmarker eines der vereinzelten Objekte elektromagnetisch angeregt wird, um sein remittiertes Spektrum zu analysieren. Der Marker kann dabei mindestens ein Material aufweisen, das nach dem Anregen mit mindestens einer Emissionswellenlänge oder mit einer Mehrzahl Emissionswellenlängen emittiert. Neben unterschiedlichen Lumineszenzmarker können auch Mischungen unterschiedlicher Lumineszenzmarker zur Anwendung kommen, wobei die Mischungen unterschiedliche Mengenverhältnisse der einzelnen Lumineszenzmaterialien enthalten können, sodass über die Intensitätsverteilung des emittierten Spektrums ein weiteres messtechnisch auswertbares Unterscheidungsmerkmal geschaffen wird.

Das Analysieren kann das elektromagnetische Anregen eines Lumineszenzmarkers aufweisen, wobei ein Material des Markers ein lumineszierendes Material aufweisen kann, z.B. ein fluoreszierendes Material und/oder ein phosphoreszierendes Material und/oder einen Upconverter und/oder einen Downconverter.

Das Analysieren kann die Spektroskopie mindestens eines lumineszierenden Materials der vereinzelten Objekte z. B. auf einem Förderer aufweisen.

Das Sortieren der vereinzelten Objekte kann das Adressieren eines Tragmittels des Förderers, dem genau eines der vereinzelten Objekte zugeordnet ist, aufweisen, wodurch das vereinzelte Objekt der Zieladresse zugeführt wird.

Das Adressieren kann das Ansteuern einer Vielzahl unabhängig voneinander ansteuerbarer Tragmittel eines Förderers aufweisen. Der Förderer kann beispielsweise ein Kreuzbandsortierer mit einer Vielzahl verketteter und unabhängig voneinander ansteuerbarer Förderbänder oder ein Fallklappensorter mit einer Vielzahl unabhängig voneinander ansteuerbarer Fallklappen sein.

Das Analysieren kann das Erfassen einer auf das Objekt aufgebrachten oder in das Objekt eingebrachten Eigenschaft aufweisen, etwas das Erfassen eines Fluoreszenzcodes, eines Wasserzeichens, eines Bar-Codes, eines QR-Codes, eines Symbols und/oder einer Artikelnummer. Alternativ kann das spektroskopische Analysieren das Erfassen einer nativen Eigenschaft des Objekts aufweisen, etwa einer chemischen Materialzusammensetzung des Objekts und/oder einer Form des Objekts.

Nach dem Abgleichen und vor dem Sortieren kann einem Tragmittel des Förderers, dem genau eines der vereinzelten Objekte zugeordnet ist, die über die erfasste Materialeigenschaft des vereinzelten Objekts in dem Tragmittel und die Referenzmaterialeigenschaft verknüpfte Zieladresse zugewiesen werden.

In dem Fall, dass bei dem Abgleichen der erfassten Materialeigenschaft mit den in der Datenbank hinterlegten Referenzmaterialeigenschaften keine Referenzmaterialeigenschaft gefunden wird, welches identisch mit der erfassten Materialeigenschaft ist, kann bei dem Sortieren des betroffenen Objekts dem Objekt eine Standardadresse zugewiesen oder das betroffene Objekt nochmals der Vereinzelung und damit nochmals der Analyse zugeführt werden.

Das Analysieren kann das Analysieren mindestens eines auf dem Objekt oder in dem Objekt angeordneten Lumineszenzmarkers oder mehrerer sich in mindestens einer erfassbaren Lumineszenz-Eigenschaft unterscheidender Marker aufweisen, wobei sich die mehreren Marker etwa einer Mischung von Markern auch hinsichtlich ihres Mengenverhältnisses zueinander voneinander unterscheiden können.

Auf mindestens eines der bereitgestellten Objekte kann eine einen Fluoreszenscode aufweisende Druckfarbe aufgebracht worden sein. Die Druckfarbe kann beispielsweise weiße Druckfarbe, etwa in einem Teilbereich einer Bedruckung eines Etiketts oder einer Schrumpffolie des Objekts sein. Die Druckfarbe kann auch in Form einer Direktbedruckung des Objekts bereitgestellt sein, etwa wenn das Objekt eine Verpackung ist.

Auf mindestens einem der bereitgestellten Objekte kann vor dem Bereitstellen ein einen Fluoreszenscode aufweisender Etiketten-Klebstoff oder ein einen Fluoreszenscode aufweisender Etikettenlack aufgebracht worden sein.

Vor dem Bereitstellen kann ein Etikett oder eine Schrumpffolie auf das Objekt aufgebracht werden, welches in seinem Grundmaterial einen Fluoreszenzcode aufweist.

Vor dem Bereitstellen kann das Objekt aus einem Grundmaterial hergestellt werden, beispielsweise aus einem Kunststoffmaterial, welches eine einen Fluoreszenzcode aufweisende Materialbeimischung aufweist.

Das Analysieren kann das Bestimmen einer Intensität für eine oder für mehrere Emissionswellenlängen des emittierten Spektrums und/oder das Bestimmen der Intensität für einen oder für mehrere Emissionswellenlängenbereiche des Spektrums und/oder das Bestimmen eines Intensitätsverhältnisses zwischen mehreren Emissionswellenlängen oder mehreren Emissionswellenlängenbereichen des Spektrums und/oder das Bestimmen der Intensität eines Emissionsspektrums und/oder eines dynamischen Emissionsverhaltens aufweisen.

Das Analysieren kann das sequentielle Hindurchleiten der vereinzelten Objekte durch ein tunnelförmiges oder rohrförmiges Detektionsmodul aufweisen, an dessen Innenwandung mindestens ein Sensor für das Erfassen des emittierten Spektrums angeordnet ist.

Das Hindurchleiten kann das schwerkraftgetriebene Hindurchleiten der vereinzelten Objekte durch das rohrförmige oder tunnelförmige Detektionsmodul aufweisen. Dazu kann das rohrförmige oder tunnelförmige Detektionsmodul mit seiner Symmetrieachse, entlang welches es durchlässig ist, in Vertikalrichtung oder im Wesentlichen in Vertikalrichtung ausgerichtet sein.

Das Analysieren der vereinzelten Objekte kann das Analysieren mit mehreren voneinander unabhängigen Detektionsmodulen aufweisen. Dabei kann vorgesehen sein, dass die analysierten Objekte je Detektionsmodul einem separaten Sorter zugeführt werden. Der Sorter kann beispielsweise ein Kreuzbandsortierer, ein Fallklappensorter oder dergleichen sein. Dabei kann vorgesehen sein, dass die Sorter entsprechend der Zieladresse dieselbe Mehrzahl Transportvorrichtungen beschicken, sodass die Objekte von den Transportvorrichtungen jeweils einer der Zieladressen unmittelbar zugeführt werden können.

Das Analysieren, das Abgleichen und das Sortieren der vereinzelten Objekte erfolgt mehrfach, insbesondere in mehreren aufeinanderfolgenden Teilschritten. Dabei kann in einem ersten Analyseschritt mindestens ein erstes emittiertes Spektrum und in mindestens einem weiteren Analyseschritt mindestens ein weiteres emittiertes Spektrum erfasst werden. Nach dem ersten Analyseschritt und einem ersten Abgleichschritt kann ein erster Teil der Zieladresse und nach dem mindestens einen weiteren Analyseschritt und dem mindestens einen weiteren Abgleichschritt kann mindestens ein weiterer Teil der Zieladresse zugewiesen werden. Dabei kann vorgesehen sein, dass das Objekt nach dem Durchlaufen sämtlicher Analyseschritte und sämtlicher Abgleichschritte sowie nach der Zuweisung aller Teile der Zieladresse der Zieladresse zugeführt wird.

Das Analysieren, das Abgleichen und das Sortieren der vereinzelten Objekte erfolgt mehrfach, wobei in einem ersten Analyseschritt mindestens eine erste Materialeigenschaft eines der vereinzelten Objekte erfasst und nach dem Abgleichen ein erster Teil der Zieladresse zugewiesen wird. Dabei kann das vereinzelte Objekt nach dem Zuweisen über ein Transportsystem der Zieladresse zugeführt werden und/oder mindestens einem weiteren Detektionsmodul für einen weiteren Analyseschritt mindestens einer von der ersten unterschiedlichen weiteren Materialeigenschaft zugeführt und nach dem Abgleichen ein weiterer Teil der Zieladresse zugewiesen werden. Schließlich kann nach dem Zuweisen sämtlicher Teile der Zieladresse das Objekt der Zieladresse zugeführt werden.

Die erfindungsgemäß analysierten Materialeigenschaften der vereinzelten Objekte können als Marker in Form von Fluoreszenz-Codes bereitgestellt werden. Für die Bereitstellung entsprechender Fluoreszenz-Codes werden nachstehend Ausführungsbeispiele angegeben:

### Ausführungsbeispiel 1

Zur Herstellung unterschiedlicher Fluoreszenz-Codes werden drei Lumineszenzmaterialien miteinander gemischt. Die Lumineszenzmaterialien besitzen dieselbe Anregungswellenlänge, weisen jedoch unterschiedlichen Emissionswellenlängen auf, wobei Marker 1 bei Wellenlänge λ1, Marker 2 bei Wellenlänge λ2, und Marker 3 bei Wellenlänge λ3 emittiert. Die Masseanteile der einzelnen Materialien an der Gesamtmischung betragen in diesem Beispiel 0%, 25%, 50%, 75% oder 100%. Dies ergibt 15 Fluoreszenzcodes:

| | Massenanteile | | | Emissionswellenlänge | | | Intensitätsverhältnis |
|---|---|---|---|---|---|---|---|
| Fluoreszenz-Code | Marker 1 | Marker 2 | Marker 3 | λ1 | λ2 | λ3 | Marker 1 : Marker 2 : Marker 3 |
| C1 | 100 % | 0% | 0% | + | | | 1:0:0 |
| C2 | 75% | 25% | 0% | + | + | | 3:1:0 |
| C3 | 50% | 50% | 0% | + | + | | 1:1:0 |
| C4 | 25% | 75% | 0% | + | + | | 1:3:0 |
| C5 | 0% | 100 % | 0% | | + | | 0:1:0 |
| C6 | 75% | 0% | 25% | + | | + | 3:0:1 |
| C7 | 50% | 25% | 25% | + | + | + | 2:1:1 |
| C8 | 25% | 50% | 25% | + | + | + | 1:2:1 |
| C9 | 0% | 75% | 25% | | + | + | 0:3:1 |
| C10 | 50% | 0% | 50% | + | | + | 1:0:1 |
| C11 | 25% | 25% | 50% | + | + | + | 1:1:2 |
| C12 | 0% | 50% | 50% | | + | + | 0:1:1 |
| C13 | 25% | 0% | 75% | + | | + | 1:0:3 |
| C14 | 0% | 25% | 75% | | + | + | 0:1:3 |
| C15 | 0% | 0% | 100 % | | | + | 0:0:1 |

Die Fluoreszenz-Codes unterscheiden sich in Bezug auf die emittierten Emissionswellenlängen und die Lumineszenz-Intensität bei den Emissionswellenlängen.

Die unterschiedlichen Lumineszenzintensitäten führen zu unterschiedlichen Intensitätsverhältnissen zwischen den Emissionswellenlängen.

### Ausführungsbeispiel 2

Flaschen aus PET und Schrumpffolien aus PET-G sollen in getrennte Behälter sortiert werden. Die Flaschen enthalten keinen Fluoreszenzcode, die Schrumpffolien enthalten den Fluoreszenzcode "C8". Die Objekte werden vereinzelt und durch ein Detektionsmodul mittels NIR-Spektroskopie und Fluoreszenz-Spektroskopie analysiert. Mittels NIR-Spektroskopie wird für die Flaschen und Schrumpffolien die Materialeigenschaft "PET" erfasst. Mittels Fluoreszenz-Spektroskopie wird nur für die Schrumpffolien die Materialeigenschaft "Enthält Fluoreszenz-Code C8" erfasst. In einer Datenbank ist für Materialien mit der Materialeigenschaft "PET" die Ziel-Adresse "Behälter A" und für Materialien mit den kombinierten Materialeigenschaften "PET und Fluoreszenz-Code C8" die Ziel-Adresse "Behälter B" hinterlegt. Nach der Analyse einer PET-Flasche mit Erfassung der Materialeigenschaft "PET" wird die PET-Flasche auf ein eigenes Tragmittel eines Fallklappensorters abgelegt. Durch Abgleich der erfassten Materialeigenschaft "PET" mit der Datenbank wird diesem Tragmittel die Ziel-Adresse "Behälter A" zugewiesen. Das Tragmittel wird zu Behälter A transportiert und dort entleert. Nach der Analyse einer Schrumpffolie mit Erfassung der Materialeigenschaften "PET und Fluoreszenz-Code C8" wird die Schrumpffolie auf ein eigenes Tragmittel eines Fallklappensorters abgelegt. Durch Abgleich der erfassten Materialeigenschaft "PET und Fluoreszenz-Code C8" mit der Datenbank wird diesem Tragmittel die Ziel-Adresse "Behälter B" zugewiesen. Das Tragmittel wird zu Behälter B transportiert und dort entleert.

### Ausführungsbeispiel 3

Drei Sorten Verpackungen aus identischem Grundmaterial werden in unterschiedlichen Wirtschaftsbereichen eingesetzt. Sorte 1 dient der Verpackung von Lebensmitteln. Sorte 2 dient der Verpackung von Reinigungsmitteln. Sorte 3 dient der Verpackung von Kühlmittel. Die Verpackungen aller Sorten sollen voneinander getrennt werden. Sorte 1 enthält ein Etikett mit Fluoreszenzcode C2 in der Druckfarbe des Etiketts. Sorte 2 enthält ein Etikett mit Fluoreszenzcode C14 im Etiketten-Lack. Sorte 3 enthält den Fluoreszenzcode C10 in der Druckfarbe einer direkt auf die Verpackung gedruckten Beschriftung. Die Objekte werden vereinzelt und durch ein Detektionsmodul mittels wellenlängenspezifischer Photodioden analysiert.

Nach der Analyse der vereinzelten Objekte werden diese einzeln jeweils auf ein eigenes Tragmittel eines Fallklappensorters abgelegt. Durch Abgleich der erfassten Fluoreszenz-Codes der Objekte mit den in der Datenbank hinterlegten Fluoreszenz-Codes und den damit verknüpften Ziel-Adressen, wird den Tragmitteln die entsprechende Ziel-Adresse zugewiesen. Die Tragmittel werden zu den jeweiligen Behältern transportiert und dort entleert.

### Ausführungsbeispiel 4

PE-Flaschen von 8 Herstellern sollen sortenrein getrennt werden. Die PE Flaschen der Hersteller 1 und 2 tragen Etiketten mit den Hersteller-spezifischen Fluoreszenzcodes C1 und C2. Die PE Flasche des Herstellers 3 enthält einen Hersteller-spezifischen Fluoreszenzcode C3 im Grundmaterial der Flasche. Die PE Flasche des Herstellers 4 trägt ein Etikett mit einem QR-Code, die PE Flasche des Herstellers 5 trägt ein Etikett mit einem charakteristischen Symbol, die PE Flasche des Herstellers 6 trägt ein Etikett mit einem Wasserzeichen, die PE Flasche des Herstellers 7 trägt ein Etikett mit einem durch Röntgenfluoreszenzanalyse (RFA) lesbaren Code. Die PE Flaschen der Hersteller 1-7 weisen dieselbe Form auf, Hersteller 8 verwendet eine PE-Flasche mit charakteristischer Form. Neben den genannten PE-Flaschen befinden sich weitere PE-Flaschen unbekannter Hersteller ohne die oben genannten Merkmale und Objekte aus PP oder Metall.

Die Objekte werden vereinzelt und durch ein Detektionsmodul mittels Fluoreszenz-Spektroskopie, Einrichtungen zur optischen Bilderkennung, Röntgenfluoreszenzspektroskopie, NIR-Spektroskopie und Metalldetektoren analysiert. Mittels Fluoreszenz-Spektroskopie werden die Materialeigenschaften "Enthält Fluoreszenz-Code C1/C2/C3" erfasst. Mittels optischer Bilderkennung werden die Materialeigenschaften "Enthält QR-Code von Hersteller 4", "Enthält Symbol von Hersteller 5", "Enthält Wasserzeichen von Hersteller 6" und "PE-Flasche besitzt charakteristische Form von Hersteller 8" erfasst. Mittels Röntgenfluoreszenzanalyse wird die Materialeigenschaft "Enthält RFA-Code von Hersteller 7" erfasst. Mittels NIR-Spektroskopie werden für die Objekte die Materialeigenschaften "PE" und "PP" erfasst. Mittels Metalldetektion werden für die Objekte die Materialeigenschaft "enthält Metall" erfasst. In einer Datenbank sind für die Materialeigenschaften folgende Ziel-Adressen hinterlegt:

| Materialeigenschaft | | | | | | | | | | | Ziel-Adresse |
|---|---|---|---|---|---|---|---|---|---|---|---|
| Fluoreszenz-Code | | | QR Hersteller 4 | Symbol Hersteller 5 | Wasserzeichen Hersteller 6 | RF-Code Hersteller 7 | Flaschenform Hersteller 8 | P E | P P | Metal l | |
| C1 | C 2 | C 3 | | | | | | | | | |
| + | | | | | | | | + | | | H1 |
| | + | | | | | | | + | | | H2 |
| | | + | | | | | | + | | | H3 |
| | | | + | | | | | + | | | H4 |
| | | | | + | | | | + | | | H5 |
| | | | | | + | | | + | | | H6 |
| | | | | | | + | | + | | | H7 |
| | | | | | | | + | + | | | H8 |
| | | | | | | | | | + | | PP |
| | | | | | | | | + | | | PE |
| | | | | | | | | | | + | ME |
| | | | | | | | | | | | O |

Nach der Analyse der vereinzelten Objekte werden diese einzeln jeweils auf ein eigenes Tragmittel eines Fallklappensorters abgelegt. Durch Abgleich der erfassten Materialeigenschaften der Objekte mit der Datenbank wird den Tragmitteln die entsprechende Ziel-Adresse zugewiesen. Die Tragmittel werden zu den jeweiligen Behältern transportiert und dort entleert. Auf diese Weise werden die PE-Flaschen der Hersteller 1,2,3,4,5,6,7 und 8 jeweils zu den Behältern H1, H2, H3, H4, H5, H6 und H8 transportiert. PE-Flaschen für die lediglich die Materialeigenschaft "PE" erfasst wurden, gelangen zu Behälter PE. Objekte aus PP werden zu Behälter PP transportiert. Objekte für die keinerlei Materialeigenschaft erfasst wurde die in der Datenbank hinterlegt ist, werden zu Behälter 0 transportiert.

Weitere Einzelheiten der Erfindung werden anhand der nachstehenden Figuren erläutert. Dabei zeigt:
- Figur 1: ein Sortierverfahren gemäß dem Stand der Technik;
- Figur 2: eine erste Ausführungsform eines erfindungsgemäßen Sortierverfahrens;
- Figur 3: eine beispielhafte Ausführungsform der Zuweisung einer Zieladresse zu einem Objekt;
- Figur 4: eine weitere Ausführungsform eines erfindungsgemäßen Sortierverfahrens;
- Figur 5: noch eine weitere Ausführungsform eines erfindungsgemäßen Sortierverfahrens;
- Figur 6: noch eine weitere Ausführungsform eines erfindungsgemäßen Sortierverfahrens;
- Figur 7: eine beispielhafte Ausführungsform zur Aussortierung nicht erkannter Objekte; und
- Figur 8: ein Verfahren zur Rückführung nicht erkannter Objekte.

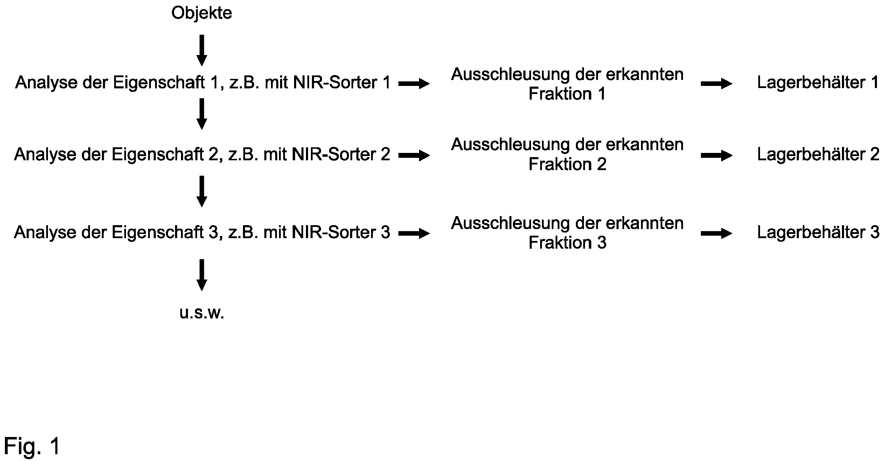

Die Figur 1 veranschaulicht ein Sortierverfahren gemäß dem Stand der Technik. Diese Verfahren zeichnen sich insbesondere dadurch aus, dass die Identifikation und die Sortierung der Objekte, etwa anhand von Materialfraktionen, sequentiell erfolgt, wobei in jedem Sortierschritt lediglich eine einzelne Fraktion identifiziert und aussortiert werden kann. Die Identifikation beruht dabei auf Materialeigenschaften der Objekte. Dies hat zur Folge, dass nur wenige Spezifikationen unterschieden werden können, beispielsweise kann lediglich anhand der Hauptpolymere Polyethylen, Polypropylen, Polystyrol, Polyethylenterephthalat, Polyvinylchlorid usw. unterschieden werden. Die bekannten Sortierverfahren sind insofern ineffizient, insbesondere hinsichtlich der bereitgestellten Unterscheidbarkeit, die über die Unterscheidung der zuvor genannten Materialien hinausgeht.

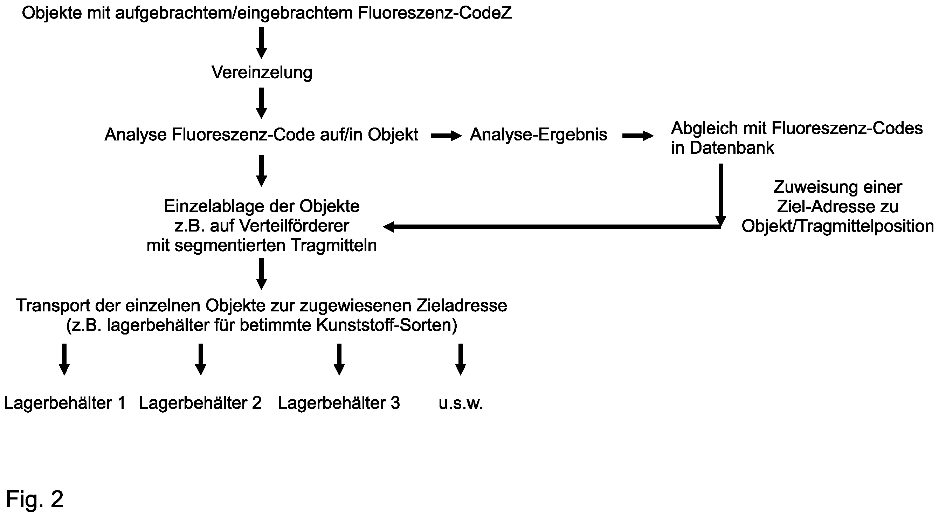

Die Figur 2 schlägt daher in beispielhafter Ausführungsform ein Verfahren vor, bei dem die der Sortierung zugrunde gelegten Objekte zumindest teilweise einen aufgebrachten, eingebrachten oder beigemengten lumineszierenden Code, beispielsweise einen Fluoreszenzcode aufweisen. Die Objekte können beispielsweise pulkförmig bereitgestellt werden, sodass diese in einem ersten Schritt zur Optimierung des Analyseergebnisses zunächst vereinzelt werden. Die vereinzelten Objekte werden dann einer Analyse des Fluoreszenzcode unterzogen, wobei das Analyseergebnis einem Abgleich mit Referenz-Fluoreszenzcodes, die in einer Datenbank hinterlegt sind, unterzogen wird, wobei in der Datenbank die Referenz-Fluoreszenzcodes Zieladressen zugeordnet sind. Bei den Zieladressen kann es sich um verschiedene Lagerbehälter handeln, in welche nur bestimmte Materialfraktionen, z.B. nur bestimmte Kunststoffsorten oder nur bestimmte Objekte bestimmter Hersteller einsortiert werden sollen. Durch den Abgleich zwischen Analyseergebnis und Referenz-Fluoreszenzcodes wird somit die Fraktionszugehörigkeit der analysierten Objekte erfasst.

Nach dem Abgleich kann folglich die Zieladresse dem analysierten Objekt bzw. einem Tragmittel eines Förderers, beispielsweise eines Transportbehälters eines Fallklappensorters, einem Segment eines Kreuzbandsortierers oder dergleichen zugewiesen werden. Die auf dem Sorter vereinzelten Objekte können somit beispielsweise auf einem Verteilförderer mit segmentierten Tragmitteln positioniert sein, wodurch es ermöglicht wird, die einzelnen Objekte mit der zugewiesenen Zieladresse zu der zugewiesenen Zieladresse zu transportieren, etwa zu einem Lagerbehälter für bestimmte Kunststoffsorten eines bestimmten Herstellers oder zu einem anderweitig spezifischen Adressaten.

Im Unterschied zum Stand der Technik erfolgt die Identifikation und Sortierung der Objekte somit entsprechend eines Lumineszenzmarker-Codes auf oder in den Objekten. Die Identifikation und Sortierung der Material-Fraktion erfolgt nicht sequentiell, sondern in einem einzigen Schritt. Die Identifikation beruht nicht mehr auf dem Hauptmaterial der Objekte alleine, etwa PET. Vielmehr können zusätzlich oder ausschließlich basierend auf z.B. Lumineszenzmarker-Codes beliebige Spezifikationen unterschieden werden. Dies ermöglicht zum Beispiel auch die Sortierung nach Hersteller, nach Marke, Anwendungsgebiet oder einem beliebigen anderen Kriterium, welches über die Lumineszenzmarker mit dem Objekt verknüpft ist. Das beschriebene Verfahren ermöglicht somit eine Sortierung von Objekten in verschiedene Fraktionen mit streng abgegrenzten Spezifikationen und gewährleistet damit die Fraktionszugehörigkeit der zu den einzelnen Fraktionen sortierten Objekte.

Die Einbringung bzw. Aufbringung eines Fluoreszenszcodes kann das Aufbringen eines Lumineszenzmarkers beinhalten. Der Lumineszenzmarker wiederum kann ein lumineszierendes Material aufweisen, z. B. ein fluoreszierendes Material und/oder ein phosphoreszierendes Material und/oder einen Upconverter und/oder einen Downconverter und/oder mindestens ein Material, das nach Anregung einer Anregungswellenlänge remittiert.

Unter einem lumineszierenden Material wird ein Material verstanden, welches nach Eintrag von Energie elektromagnetischer Strahlung emittiert. Dabei ist bevorzugt, dass der Energieeintrag über Photonen erfolgt, die beobachtete Lumineszenz somit Photolumineszenz ist. Die Photolumineszenz kann im UV und/oder VIS und/oder IR auftreten. Upconverter sind lumineszierende Substanzen, die nach Anregung Photonen emittieren, deren Wellenlänge kürzer ist als die Wellenlänge der Anregungsphotonen. Downconverter sind lumineszierende Substanzen, die nach Anregung Photonen emittieren, deren Wellenlänge länger ist als die Wellenlänge der Anregungsphotonen.

Je nach Art der gewünschten Unterscheidungsfähigkeit kann ein Lumineszenzmarker oder können mehrere Lumineszenzmarker, die sich in zumindest einer Eigenschaft voneinander unterscheiden, verwendet werden. Mehrere unterschiedliche Marker können beispielsweise in Form einer Mischung von Markern mit unterschiedlicher Menge eines oder mehrerer Marker bereitgestellt sein. Eine Mischung von Markern kann auch durch die Mengenverhältnisse zwischen mehreren Markern definiert sein.

Der Fluoreszenzcode bzw. der Lumineszenzmarker kann einer Druckfarbe beigemengt sein, beispielsweise in weißer Druckfarbe. Die Druckfarbe kann beispielsweise in einem Teilbereich der Bedruckung, welche ein Objekt ohnehin aufweist, bereitgestellt sein. Alternativ oder zusätzlich kann die Druckfarbe für die Bedruckung eines Etiketts, einer Schrumpffolie oder dergleichen des Objekts bereitgestellt sein. Weiterhin kann die Druckfarbe für die Direktbedruckung etwa einer Verpackung verwendet werden. Alternativ oder zusätzlich kann der Fluoreszenzcode bzw. der Lumineszenzmarker in einem Etiketten-Klebstoff, in einem Lack für ein Etikett oder einen Packstoff, in einem Grundmaterial eines Etiketts oder Schrumpffolie, oder im Grundmaterial des Objekts, z.B. in einem Kunststoff einer Kunststoffflasche, bereitgestellt sein.

Für die Vereinzelung der pulkförmig zugeführten Anordnung von Objekten kann eine beliebige Vorrichtung zur Vereinzelung der Objekte bereitgestellt sein. Dies kann beispielsweise eine Mehrzahl in Reihe geschalteter Förderbänder steigender Fördergeschwindigkeit aufweisen, Schikanen, eine Rütteleinrichtung, ein Robotersystem, eine Einschleusestation mit manueller Beschickung oder dergleichen sein. Dabei kann die Vereinzelung das Ziel verfolgen, die Objekte in Vorschubrichtung eines Fördermittels in Reihe angeordnet zu positionieren. Der Weitertransport der Objekte kann mit Hilfe eines Verteilförderers mit segmentierten Tragmitteln, aber auch mit Hilfe eines Verteilförderers mit kontinuierlichen Tragmitteln erfolgen.

Vor der Vereinzelung können die Objekte maschinell aus einem Sammellager dem Sortierverfahren zugeführt werden. Alternativ können die Objekte auch durch manuelle Beschickung zugeführt werden. Werden die einzelnen Objekte hierbei nacheinander auf zugeführt wird gleichzeitig eine Vereinzelung der Objekte erreicht.

Ein Verteilförderer mit segmentierten Tragmitteln ist eine Förderanlage, bei der sich jedes transportierte Objekt an einem definierten Platz, z.B. in einer wannenförmigen Aufnahmestelle befindet. Bei Verteilförderern mit kontinuierlichen Tragmitteln befinden sich die Objekte nicht an definierten Plätzen.

Die Vereinzelung bietet mehrere Vorteile. Zum einen wird bei der Analyse der Materialeigenschaften nur ein Objekt untersucht. Daher können objektspezifische Analyseergebnisse erhalten werden. Ohne Vereinzelung könnten mehrere Objekte mit unterschiedlichen Materialeigenschaften gleichzeitig im Detektionsmodul vorliegen, was zu vermischten Analyseergebnissen führen würde. Ferner ermöglicht die Vereinzelung eine Ablage einzelner Objekte auf je ein segmentiertes Tragmittel und damit den gezielten Transport einzelner Objekte zu definierten Zielstellen.

Nachdem die Objekte die Vorrichtungen zur Vereinzelung durchlaufen haben, kann das Vorliegen vereinzelter Objekte kontrolliert werden. Dies kann mittels optischer Bilderkennung erfolgen. Bei Detektion mehrerer Objekte und damit fehlerhafter Vereinzelung kann ein Pausieren des Analyseprozesses induziert werden. Die Gruppe nicht-vereinzelter Objekte durchläuft das Detektionsmodul dann ohne Analyse und kann anschließend als unanalysierbar aussortiert oder dem Vereinzelungsschritt erneut hinzugeführt werden.

Die Analyse des Fluoreszenzcodes bzw. der Lumineszenzmarker kann mit bekannten Methoden der Spektroskopie erfolgen, worunter im Rahmen dieser Anmeldung alle Methoden und Vorrichtungen zu verstehen sind, die geeignet sind, ein Gesamtemissionsspektum, ein Teilemissionsspektrum, Wellenlängenbereiche, einzelne Emissionswellenlängen oder ein dynamisches Emissionsverhalten zu analysieren.

Die Analyse des Fluoreszenzcodes bzw. der Lumineszenzmarker kann die Analyse der Intensität für eine oder für mehrere Emissionswellenlängen des Fluoreszenzcodes und/oder die Analyse der Intensität für ein oder mehrere Emissionswellenlängenbereiche des Fluoreszenzcodes und/oder die Analyse der Intensitätsverhältnisse zwischen Emissionswellenlängen oder Emissionswellenlängenbereichen und/oder die Analyse eines Emissionsspektrums und/oder die Analyse eines dynamischen Emissionsverhaltens aufweisen. Im Anschluss daran kann durch Abgleich des Analyseergebnisses mit in einer Datenbank hinterlegten Fluoreszenzcodes eine Zuweisung einer Zieladresse zu dem analysierten Objekt erfolgen.

Unter dem dynamischen Emissionsverhalten wird das Lumineszenzemissionsverhalten über die Zeit verstanden. Zur Analyse kann nach dem Ende der Lumineszenz-Anregung die Emission der Lumineszenz in einem festgelegten Zeitraum messtechnisch erfasst werden. Nach der Anregung kann die Lumineszenzintensität für eine Emissionswellenlänge oder einen Wellenlängenbereich nach festgelegten Zeitintervallen mehrfach bestimmt werden. Aus den erhaltenen absoluten Intensitäten können Intensitätsverläufe über der Zeit gebildet werden. Dies kann auch für mehrere Emissionswellenlängen oder Wellenlängenbereiche durchgeführt werden. Ebenso können Intensitätsverhältnisse zwischen verschiedenen Emissionswellenlängen oder Emissionswellenlängenbereichen gebildet werden. Auch ist bevorzugt, dass die Abklingkonstante für eine oder mehrere Emissions-Wellenlängen oder Wellenlängenbereiche bestimmt wird. Unter der Abklingkonstante wird die Zeitspanne verstanden, in der die Ausgangsintensität der Emission auf das 1/e-fache abfällt.

Zur Anregung der Lumineszenz können breit- und/oder schmalbandige Quellen wie z.B. Laser, Laserdioden, lichtemittierende Dioden (LEDs), Xenonlampen, Halogenlampen einzeln oder in Kombination zur Anwendung kommen. Die Anregungsquellen können einzeln aktiviert oder gleichzeitig oder sequentiell in unterschiedlichen Kombinationen aktiviert werden. In den Anregungseinrichtungen können optische Filter wie Langpass/Kurzpass/Bandpass-Filter zum Einsatz kommen. Ferner kann eine Variation der Öffnungsweite der Anregungsquellen vorgesehen sein, um die Größe einer Anregungszone, durch welche zu identifizierendes Material transportiert wird, zu modulieren. Die Anregungszone kann auch dadurch moduliert werden, dass mehrere Anregungsquellen sequentiell hintereinander angeordnet werden und die Anzahl der aktivierten Anregungsquellen in dieser Anordnung variiert wird.

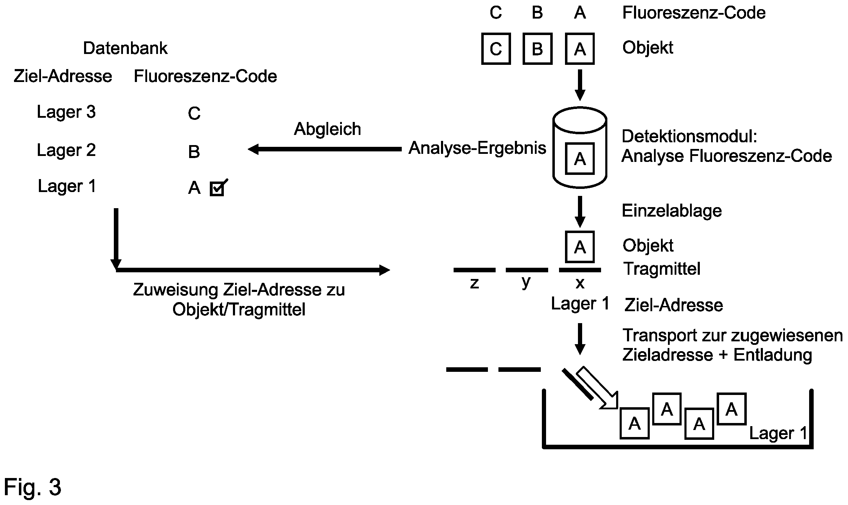

Die Figur 3 zeigt eine beispielhafte Ausführungsform eines erfindungsgemäßen Verfahrens, wobei bei der Ausführungsform bereits davon ausgegangen wird, dass die Objekte zuvor vereinzelt wurden. Die Objekte weisen jeweils einen Fluoreszenz-Code A, B, C auf, welcher mit Hilfe eines Detektionsmoduls spektroskopisch analysiert werden kann. Das Analyseergebnis wird in einem Abgleichschritt dazu verwendet, unter Zugriff auf eine Datenbank eine dem erfassten Fluoreszenzcode zugeordnete Zieladresse aus der Datenbank abzurufen, welche dem Objekt infolge des Abgleichens zugeordnet wird. Durch den Abgleichschritt wird somit die Fraktionszugehörigkeit der analysierten Objekte erfasst. Die Zuordnung der Zieladresse zu dem Objekt kann insoweit erfolgen, als dass die Zuordnung zu einem einzeln ansteuerbaren Tragmittels des Förderers, auf dem die Objekte transportiert sind, zugewiesen ist. Die Tragmittel sind einzeln ansteuerbar, beispielsweise nach Art eines Kreuzbandsortierers oder Art eines Fallklappen-Sorters, wodurch eine Zuführung des Objektes zu der ihm oder seinem Tragmittel zugewiesenen Zieladresse möglich/ermöglicht wird, beispielsweise zu einem Lagerbehälter zur sortenreinen und/oder herstellerreinen Ablage von sortierten Objekten.

Neben der Analyse lumineszierender Codes kann auch auf die Auswertung anderer Materialeigenschaften, einschließlich Kennzeichnungen der Objekte für die Unterscheidung der Objekte zugegriffen werden. Unter einer Materialeigenschaft soll im Rahmen dieser Erfindung jegliche Eigenschaft verstanden werden, welche zur Unterscheidung von Objekt- und Materialfraktionen und Zuordnung von Objekten und Materialien zu diesen Fraktionen verwendet werden kann. Die Unterscheidung kann dazu beispielsweise die Analyse von Kennzeichnungen auf oder in den Objekten wie Artikelnummern, Symbolen, Logos, Bildmarken, Bar-Codes, QR-Codes, Wasserzeichen, RFA-Codes und dergleichen aufweisen. Des Weiteren kann eine Auswertung der Form des Objekts folgen. Weiterhin kann eine Analyse von Materialeigenschaften im engeren Sinne erfolgen, beispielsweise die Analyse der Farbe oder einer chemischen Zusammensetzung der Objekte.

Unter Wasserzeichen sollen für das menschliche Auge unauffällige Kodierungen, die auf der Oberfläche von Objekten, z.B. Verpackungen angebracht werden, verstanden werden. Die Erfassung der Wasserzeichen erfolgt mit Kamerasystemen.

Unter einem RFA-Code soll ein Code verstanden werden, welcher mittels Röntgenfluoreszenzanalyse (RFA) detektiert werden kann. Der RFA-Code kann z.B. durch definierte Mengen eines oder mehrerer chemischer Elemente gebildet werden. Wie der Fluoreszenz-Code kann auch der RFA-Code z.B. einer Druckfarbe beigemengt sein oder in einem Etiketten-Klebstoff, in einem Lack für ein Etikett oder einen Packstoff, in einem Grundmaterial eines Etiketts oder Schrumpffolie, oder im Grundmaterial des Objekts, z.B. in einem Kunststoff einer Kunststoffflasche, bereitgestellt sein.

Die verwendeten Detektionstechnologien können eine Sensorik zur Lumineszenz-Analyse, eine optische Sensorik, etwa Kamerasysteme, eine VIS-Spektrometrie, eine Nah-Infrarot-Spektrometrie (NIR), Röntgensensorik (z.B. RFA), Laserinduzierte Plasmaspektroskopie (LIPS), Metallsensorik und dergleichen aufweisen. Zur Lumineszenz-Analyse können beispielsweise verschiedene Detektoren wie Schwarzweiß-Kameras, Farb-Kameras, Photomultiplier, Spektrometer, Fotozellen, Fotodioden, Fototransistoren alleine oder in Kombination zum Einsatz kommen. Ferner können optische Filter wie z.B. Langpass/Kurzpass/Bandpass-Filter enthalten sein.

Das so gewonnene Analyseergebnis kann in der zuvor bereits beschriebenen Weise wiederum nach Abgleich mit Referenzdaten in einer Datenbank und diesen zugewiesenen Zieladressen dazu verwendet werden, die Fraktionszugehörigkeit des analysierten Objekts zu erfassen, dem analysierten Objekt seine vorgesehene Zieladresse zuzuweisen und durch Einzelablage der Objekte, beispielsweise auf einem Verteilförderer mit segmentierten Tragmitteln, die Objekte den zugewiesenen Zieladressen zuzuführen.

Die Bestimmung der Fraktionszugehörigkeit und Sortierung eines Objekts zu einer Zieladresse beruht nicht nur auf einer analysierten Materialeigenschaft, sondern auch auf einer Kombination mehrerer verschiedener Materialeigenschaften. In der Datenbank sind für die einzelnen Materialeigenschafts-Kombinationen Referenzdaten abgelegt und mit Zieladressen verknüpft. Die erfasste Materialeigenschafts-Kombination wird mit den in der Datenbank hinterlegten Referenz-Materialeigenschafts-Kombinationen abgeglichen. Stimmt die erfasste Materialeigenschafts-Kombination mit einer Referenz-Materialeigenschafts-Kombination überein, wird die der Referenz-Materialeigenschafts-Kombination zugewiesene Zieladresse dem analysierten Objekt zugewiesen. Das analysierte Objekt kann somit der zugewiesenen Zieladresse, welche z.B. ein bestimmtes Sammellager sein kann, zugeführt.

Durch die Erfassung vieler verschiedener Materialeigenschaften kann die Anzahl der unterscheidbaren Spezifikationen erhöht werden.

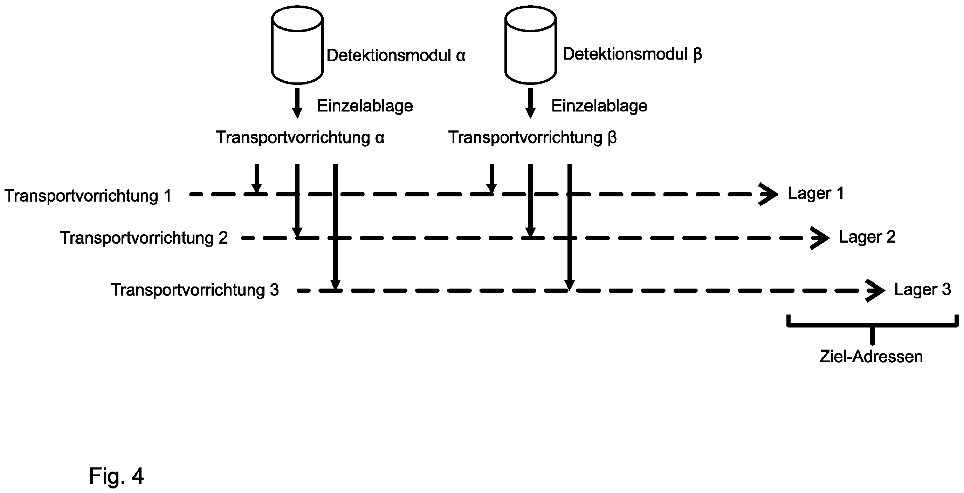

Figur 4 zeigt eine Ausführungsform, die den Parallelbetrieb von zwei Detektionsmodulen α und β zeigt sowie den Transport zu drei unterschiedlichen Zieladressen. Die Transportvorrichtungen α und β übergeben die Objekte an die Transportvorrichtungen 1, 2 und 3, welche die Zieladressen Lager 1, Lager 2 und Lager 3 beschicken. Die Transportvorrichtungen α und β können z.B. Fallklappensorter sein und somit Objekte zu verschiedenen Zieladressen schicken, während die Transvorrichtungen 1, 2 und 3 nur bestimmte Zieladressen ansteuern. Das führt zu einer Erhöhung der Produktivität. Die Einzelablage der in den Detektionsmodulen α und β analysierten Objekte kann auf bekannte Sorters, beispielsweise Fallklappensorter oder dergleichen erfolgen. Demgemäß kann vorgesehen sein, dass das Analysieren der vereinzelten Objekte das Analysieren mit mehreren voneinander unabhängigen Detektionsmodulen aufweist, von denen die analysierten Objekte je Detektionsmodul einem separaten Sorter zugeführt werden. Die Sorter können dabei entsprechend der Zieladresse dieselbe Mehrzahl Transportvorrichtungen beschicken und die Transportvorrichtungen führen die Objekte jeweils einer der Zieladressen zu.

Alternativ können parallel betriebene Detektionsmodule die von ihnen analysierten Objekte auch nur auf einen gemeinsamen Sorter, z.B. Fallklappensorter ablegen. Dieser Sorter führt die Objekte direkt den Zieladressen zu oder beschickt mehrere Transportvorrichtungen, welche die Objekte zu jeweils einer Zieladressen führen. In diesem Fall muss kontrolliert werden, welche Tragmittel des Sorters noch nicht mit einem Objekt belegt sind, da die Detektionsmodule analysierte Objekte nur in unbesetzte Tragmittel ablegen dürfen. Bei Doppelbelegung eines Tragmittels mit unterschiedlichen Objekten von verschiedenen Detektionsmodulen wäre die Zuordnung und der Transport der Objekte zu einer definierten Zieladresse fehlerbehaftet. Die Kontrolle der Tragmittel-Belegung kann mittels optischer Bilderkennung oder Lichtschranken erfolgen. Bei Detektion eines freien Tragmittels kann das nachfolgende Detektionsmodul freigegeben werden und das analysierte Objekt auf das freie Tragmittel ablegen. Bei Detektion eines belegten Tragmittels kann das nachfolgende Detektionsmodul deaktiviert werden und das analysierte Objekt zurückbehalten bis ein freies Tragmittel verfügbar ist.

Die Detektionsmodule können ein Führungsrohr mit im Wesentlichen aufrechter Position, d.h. vertikaler Durchlassrichtung aufweisen. Die Objekte können sich innerhalb des Führungsrohrs im Wesentlichen schwerkraftgetrieben durch das Detektionsmodul hindurchbewegen. Die Sensorik für die Analyse der Objekteigenschaften können ringförmig im Führungsrohr angeordnet sein.

Alternativ oder zusätzlich kann vorgesehen sein, dass die zu analysierenden Objekte innerhalb der Detektionsmodule aktiv gefördert werden, beispielsweise mit Hilfe eines Förderbands. Die Detektionsvorrichtungen der Detektionsmodule zur Analyse der Objekteigenschaften können über und/oder unter der Transporteinrichtung positioniert werden. Alternativ können die Detektionsvorrichtungen zur Analyse der Objekteigenschaften über und/oder unter einem Objektauswurf positioniert sein. Beispielsweise können die Objekte innerhalb des Detektionsmoduls von einer Transportvorrichtung, z.B. Förderband, auf eine zweite Transportvorrichtung übergeben werden, wobei an der Schnittstelle beider Transportvorrichtungen eine räumliche Lücke vorgesehen ist. Diese Lücke wird von den Objekten im Flug überwunden. Die Detektionsvorrichtungen zur Analyse der Objekteigenschaften können über und/oder unter der Lücke positioniert werden. Ebenso kann die Sensorik auch ringförmig um diese Lücke positioniert werden. Hierdurch können mehreren Seiten der Objekte analysiert werden.

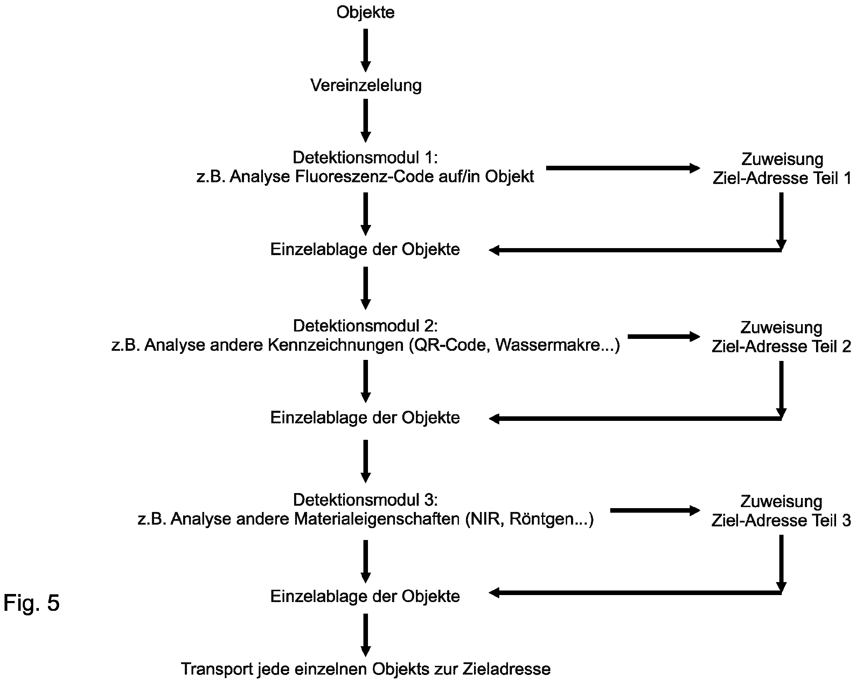

Die Figur 5 zeigt eine Ausführungsform, bei der die Analyse der vereinzelten Objekte in getrennten Detektionsmodulen erfolgt. Beispielsweise können sich die Detektionsmodule durch die Art des ausgewerteten Codes bzw. der Kennzeichnung oder Eigenschaft unterscheiden. Ein erstes Detektionsmodul kann beispielsweise für die Analyse eines Fluoreszenzcodes des Objekts vorgesehen sein. Infolge des erfassten Fluoreszenzcodes kann in der bereits zuvor beschriebenen Weise durch Rückgriff auf eine Datenbank eine Zieladressenzuordnung erfolgen. In mindestens einem der nachfolgenden Detektionsschritte mit einem der weiteren Detektionsmodule, vorliegend der Detektionsmodule 2 und 3, kann eine weitere Kennzeichnung des Objekts ausgewertet werden, beispielsweise mit dem Detektionsmodul 2 ein QR-Code, eine Wassermarke, oder dergleichen, wobei eine weitere Zieladresse bzw. ein weiterer Zieladressenteil wiederum unter Zugriff auf eine Datenbank demselben analysierten Objekt zugewiesen werden kann. Dies kann so häufig wiederholt werden, bis das Objekt sämtliche Detektionsmodule passiert hat und ggf. dabei mehrere Zieladressen bzw. Teiladressen zugewiesen bekommen hat, die in ihrer Summe ein Endziel des analysierten Objekts ergeben, dem das analysierte Objekt dann in der beschriebenen Weise zugeführt werden kann.

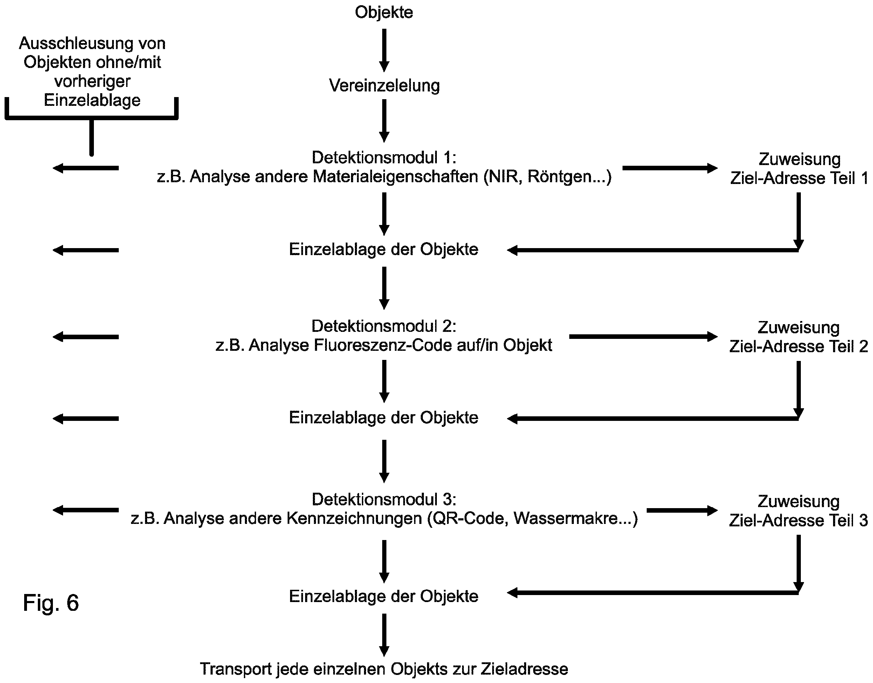

Figur 6 zeigt eine Abwandlung der in Figur 5 gezeigten Ausführungsform dahingehend, dass Objekte, die einmalig nach dem Passieren eines der Detektionsmodule 1 bis 3 eine positive Zuweisung einer Zieladresse erfahren haben, bereits aus dem Prozess ausgeschleust werden, sodass das Passieren der weiteren Detektionsmodule nicht mehr erfolgt und das Objekt insofern nach der einmaligen Zieladressenzuordnung bereits abschließend zugeordnet ist, d.h. bereits anhand der zugewiesenen Zieladresse seiner bestimmungsgemäßen Zieladresse zugeführt werden kann.

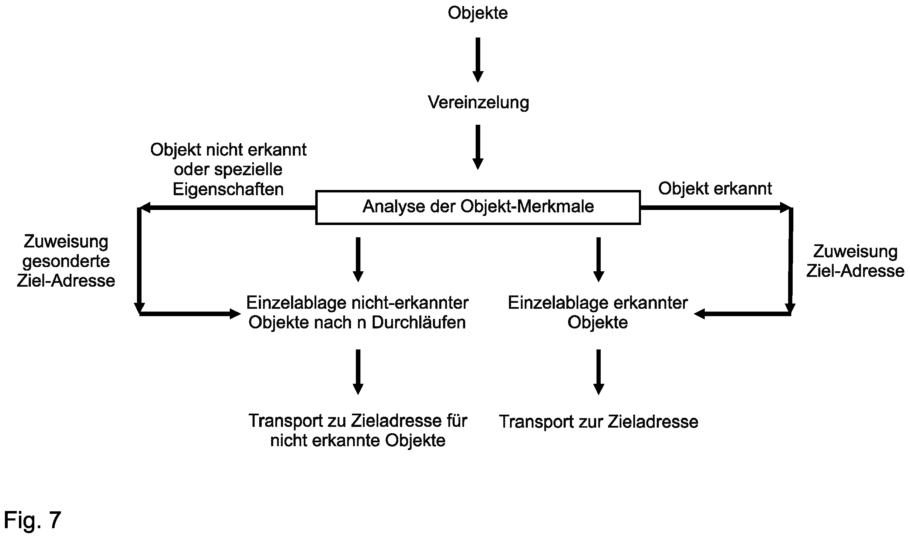

Die Figur 7 zeigt eine weitere Abwandlung der in den Figuren 5 und 6 gezeigten Ausführungsformen dahingehend, dass in dem Fall, dass bei der Analyse der Objektmerkmale eine Objekterkennung insofern nicht möglich ist, als dass keine Zieladressenzuweisung durch Abgleich möglich ist, das betroffene Objekt als nicht erkannt aussortiert oder für die weitergehende Analyse von zusätzlichen Objekteigenschaften aussortiert wird. Dies kann die Zuweisung einer gesonderten Zieladresse (Standardzieladresse) aufweisen, anhand welcher das entsprechend spezifizierte Objekt beispielsweise einer gesonderten Zieladresse für Objekte ohne erkennbaren Fluoreszenzcode oder für Objekte mit nicht zuordbarem Fluoreszenzcode transportiert wird.

Die nicht zuordbaren Objekte können weitergehend analysiert werden. Beispielsweise können die Objekte gesichtet und manuell nachsortiert werden oder Laboranalysen unterzogen werden. In der Folge können solche Objekte eventuell noch zu einer Materialfraktion hinzusortiert werden. Alternativ können solche Objekte dem Prozess erneut hinzugeführt wird, beispielsweise dem Vereinzelungsschritt.

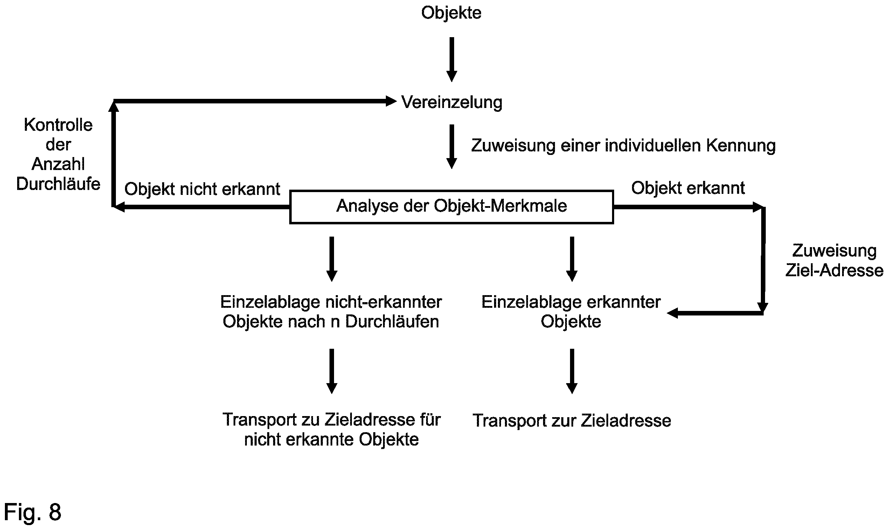

Die Figur 8 zeigt in Abwandlung der in den Figuren 5 bis 7 gezeigten Ausführungsform die automatische Rückführung nicht erkannter Objekte, wobei vorgesehen ist, dass im Falle eines im Rahmen der Analyse des Abgleichs nicht erkannten Codes und der entsprechenden Unmöglichkeit der Zuordnung einer Zieladresse, das betroffene Objekt dem Prozess erneut hinzugeführt wird, beispielsweise dem Vereinzelungsschritt, sodass das zuvor nicht erkannte Objekt erneut den Analyseschritt durchläuft. Wenn das rezirkulierte Objekt den bereits vereinzelten Objekten gezielt zugeführt wird, kann weiterhin die Anzahl der Durchläufe gezählt und ein Abbruchkriterium definiert werden, beispielsweise eine Anzahl unerfolgreicher Analysedurchläufe, nach Erreichen welcher das zuvor mehrfach nicht analysierbare Objekt als unanalysierbar aussortiert wird.

## Patentansprüche

1. Sortierverfahren, das die Schritte aufweist:
a. optional, Bereitstellen einer Vielzahl von Objekten;
b. Vereinzeln der Objekte;
c. Analysieren der vereinzelten Objekte, wobei für die Objekte jeweils mindestens eine Materialeigenschaft erfasst wird;
d. Abgleichen der erfassten Materialeigenschaft(en) mit in einer Datenbank hinterlegten Referenzmaterialeigenschaften, denen jeweils eine Zieladresse zugeordnet ist und Erfassen einer Fraktionszugehörigkeit der Objekte; und
e. Sortieren der vereinzelten Objekte entsprechend der ihrer erfassten
Materialeigenschaft(en) über eine der Referenzmaterialeigenschaften in der Datenbank zugeordneten Zieladresse;
**dadurch gekennzeichnet, dass** das Analysieren, das Abgleichen und das Sortieren der vereinzelten Objekte mehrfach erfolgt, wobei in einem ersten Analyseschritt mindestens eine erste Materialeigenschaft und in mindestens einem weiteren Analyseschritt mindestens eine weitere der Materialeigenschaften erfasst wird, wobei nach dem ersten Analyseschritt und einem ersten Abgleichschritt ein erster Teil der Zieladresse und nach dem mindestens einen weiteren Analyseschritt und dem mindestens einen weiteren Abgleichschritt mindestens ein weiterer Teil der Zieladresse zugewiesen wird, und wobei das Objekt nach dem Durchlaufen sämtlicher Analyseschritte und Abgleichschritte sowie nach der Zuweisung aller Teile der Zieladresse der Zieladresse zugeführt wird.

2. Sortierverfahren nach Anspruch 1, bei dem das Analysieren das elektromagnetische Anregen eines Lumineszenzmarkers genau eines der vereinzelten Objekte aufweist, wobei der Marker mindestens ein Material aufweist, das nach dem Anregen mit mindesten einer Emissionswellenlänge oder einer Mehrzahl Emissionswellenlänge emittiert.

3. Sortierverfahren nach Anspruch 1, bei dem das Analysieren das elektromagnetische Anregen eines Lumineszenzmarkers aufweist, wobei ein Material des Markers ein lumineszierendes Material, z.B. ein fluoreszierendes Material und/oder ein phosphoreszierendes Material und/oder einen Upconverter und/oder einen Downconverter aufweist.

4. Sortierverfahren nach einem der vorangegangenen Ansprüche, bei dem das Analysieren die Spektroskopie mindestens eines lumineszierenden Materials der vereinzelten Objekte aufweist.

5. Sortierverfahren nach einem der vorangegangenen Ansprüche, bei dem das Sortieren der vereinzelten Objekte das Adressieren eines Tragmittels eines Förderers, dem genau eines der vereinzelten Objekte zugeordnet ist, aufweist, woraufhin das vereinzelte Objekt der Zieladresse zugeführt wird.

6. Sortierverfahren nach einem der vorangegangenen Ansprüche, bei dem das Adressieren das Ansteuern eines einer Vielzahl unabhängig voneinander ansteuerbarer Tragmittel eines Förderers aufweist.

7. Sortierverfahren nach einem der vorangegangenen Ansprüche, bei dem das Analysieren
a) das Erfassen einer auf das Objekt aufgebrachten oder in das Objekt eingebrachten Materialeigenschaft aufweist, etwas das Erfassen eines Fluoreszenzcodes und/oder eines Wasserzeichens und/oder eines RFA-Codes und/oder eines Bar-Codes und/oder eines QR-Codes und/oder eines Symbols und/oder eines Logos und/oder einer Bildmarke und/oder einer Artikelnummer; und/oder
b) das Erfassen einer nativen Materialeigenschaften des Objekts, etwa einer chemischen Materialzusammensetzung des Objekts und/oder einer Farbe und/oder einer Form des Objekts aufweist.

8. Verfahren nach einem der vorangegangen Ansprüche, bei dem nach dem Abgleichen und vor dem Sortieren einem Tragmittel eines Förderers, dem genau eines der vereinzelten Objekte zugeordnet ist, die über die erfasste Materialeigenschaft des vereinzelten Objekts in dem Tragmittel und die Referenzmaterialeigenschaft verknüpfte Zieladresse zugewiesen wird.

9. Verfahren nach einem der vorangegangen Ansprüche, bei dem in dem Fall, dass bei dem Abgleichen der Materialeigenschaft mit der in der Datenbank hinterlegten Referenzmaterialeigenschaft keine Referenzmaterialeigenschaft erfasst wird, welche identisch mit der abgeglichen Materialeigenschaft ist, bei dem Sortieren des betroffenen Objekts dem Objekt eine Standardadresse zugewiesen oder das betroffene Objekt für die erneute Vereinzelung und Analyse bereitgestellt wird.

10. Verfahren nach einem der vorangegangen Ansprüche, bei dem das Analysieren das Analysieren mindestens eines auf dem Objekt oder in dem Objekt angeordneten Markers oder mehrerer sich in mindestens einer erfassbaren Lumineszenz-Eigenschaft unterscheidender Marker aufweist, wobei sich mehrere Marker einer Mischung von Markern optional auch hinsichtlich ihres Mengenverhältnisses zueinander voneinander unterscheiden können.

11. Verfahren nach einem der vorangegangen Ansprüche, bei dem auf mindestens eines der bereitgestellten Objekte vor dem Bereitstellen eine einen Fluoreszenscode aufweisende Druckfarbe aufgebracht worden ist, z.B. in weißer Druckfarbe, z.B. in einem Teilbereich einer Bedruckung eines Etiketts oder einer Schrumpffolie des Objekts oder als eine Direktbedruckung des Objekts.

12. Verfahren nach einem der vorangegangen Ansprüche, bei dem auf mindestens einem der bereitgestellten Objekte vor dem Bereitstellen ein einen Fluoreszenscode aufweisender Etiketten-Klebstoff oder ein einen Fluoreszenscode aufweisenden Etikettenlack aufgebracht worden ist.

13. Verfahren nach einem der vorangegangen Ansprüche, bei dem vor dem Bereitstellen ein Etikett oder eine Schrumpffolie auf das Objekt aufgebracht wurde, welches in seinem Grundmaterial einen Fluoreszenzcode aufweist.

14. Verfahren nach einem der vorangegangen Ansprüche, bei dem vor dem Bereitstellen das Objekt aus einem Grundmaterial hergestellt wird, beispielsweise aus einem Kunststoffmaterial, welches eine einen Fluoreszenzcode aufweisende Materialbeimischung aufweist.

15. Verfahren nach einem der vorangegangen Ansprüche, bei dem das Analysieren das Bestimmen einer Intensität für eine oder für mehrere Emissionswellenlängen eines Spektrums und/oder das Bestimmen einer Intensität für einen oder für mehrere Emissionswellenlängenbereich des Spektrums und/oder das Bestimmen eines Intensitätsverhältnisses zwischen mehrere Emissionswellenlängen oder mehreren Emissionswellenlängenbereichen des Spektrums und/oder das Bestimmen der Intensität eines Emissionsspektrums und/oder eines dynamischen Emissionsverhaltens aufweist.

16. Verfahren nach einem der vorangegangenen Ansprüche, bei dem das Analysieren das sequentielle Hindurchleiten der vereinzelten Objekte durch ein rohrförmiges oder tunnelförmiges Detektionsmodul aufweist, an dessen Innenwandung mindestens ein Sensor für das Erfassen der Materialeigenschaft, etwa eines emittierten Spektrums angeordnet ist.

17. Verfahren nach Anspruch 16, bei dem das Hindurchleiten das schwerkraftgetriebene Hindurchleiten der vereinzelten Objekte durch das tunnelförmige Detektionsmodul aufweist.

18. Verfahren nach einem der vorangegangen Ansprüche, bei dem das Analysieren der vereinzelten Objekte das Analysieren mit mehreren voneinander unabhängigen Detektionsmodulen aufweist, von denen die analysierten Objekte je Detektionsmodul einem separaten Sorter zugeführt werden, wobei die Sorter entsprechend der Zieladresse dieselbe Mehrzahl Transportvorrichtungen beschicken, und wobei die Objekte von den Transportvorrichtungen jeweils einer der Zieladressen zugeführt werden.

19. Verfahren nach einem der vorangegangen Ansprüche, bei dem das Analysieren, das Abgleichen und das Sortieren der vereinzelten Objekte mehrfach erfolgt, wobei in einem ersten Analyseschritt mindestens eine erste der Materialeigenschaft eines der vereinzelten Objekte erfasst und nach dem Abgleichen ein erster Teil der Zieladresse zugewiesen wird, wobei das vereinzelte Objekt nach dem Zuweisen über ein Transportsystem der Zieladresse zugeführt wird und/oder mindestens einem weiteren Detektionsmodul für einen weiteren Analyseschritt mindestens einer von der ersten unterschiedlichen weiteren Materialeigenschaft zugeführt und nach dem Abgleichen ein weiterer Teil der Zieladresse zugewiesen wird, und wobei nach dem Zuweisen sämtlicher Teile der Zieladresse das Objekt der Zieladresse zugeführt wird.

## Claims

1. A sorting method comprising the steps of:
a. optionally, providing a plurality of objects;
b. separating the objects;
c. analyzing the separated objects, wherein at least one material property is detected for each of the objects;
d. comparing the detected material property(s) with reference material properties stored in a database, to each of which a target address is assigned, and detecting a fraction membership of the objects; and
e. sorting the separated objects according to their detected material property(s) via a target address assigned to the reference material properties in the database;
**characterised in that** the analysis, the comparison and the sorting of the separated objects are carried out repeatedly, wherein at least one first material property is detected in a first analysis step and at least one further of the material properties is detected in at least one further analysis step, wherein a first part of the target address is assigned after the first analysis step and a first comparison step and at least one further part of the target address is assigned after the at least one further analysis step and the at least one further comparison step, and wherein the object is supplied to the target address after passing through all analysis steps and comparison steps and after the assignment of all parts of the target address.

2. The sorting method according to claim 1, in which the analysis comprises the electromagnetic excitation of a luminescence marker of precisely one of the separated objects, wherein the marker comprises at least one material which emits after the excitation with at least one emission wavelength or a plurality of emission wavelengths.

3. The sorting method according to claim 1, in which the analysis comprises the electromagnetic excitation of a luminescence marker, wherein a material of the marker comprises a luminescent material, e.g. a fluorescent material and/or a phosphorescent material and/or an up-converter and/or a down-converter.

4. The sorting method according to any one of the preceding claims, in which the analysis comprises the spectroscopy of at least one luminescent material of the separated objects.

5. The sorting method according to any one of the preceding claims, in which the sorting of the separated objects comprises the addressing of a carrying means of a conveyor, to which precisely one of the separated objects is assigned, whereupon the separated object is supplied to the target address.

6. The sorting method according to any one of the preceding claims, in which the addressing comprises the driving of one of a plurality of independently drivable carrying means of a conveyor.

7. The sorting method according to any one of the preceding claims, in which the analysis comprises
a) detecting a material property applied to the object or introduced into the object comprises detecting a fluorescence code and/or a watermark and/or an RFA code and/or a bar code and/or a QR code and/or a symbol and/or a logo and/or an image mark and/or an article number; and/or
b) detecting a native material property of the object, such as a chemical material composition of the object and/or a colour and/or a shape of the object.

8. The method according to any one of the preceding claims, in which the target address linked via the detected material property of the separated object in the carrying means and the reference material property is assigned to a carrying means of a conveyor, to which precisely one of the separated objects is assigned, after the comparison and before the sorting.

9. The method according to any one of the preceding claims, in which a standard address is assigned to the object or the object concerned is provided for the further separation and analysis in the event that no reference material property is detected during the comparison of the material property with the reference material property stored in the database, which reference material property is identical to the compared material property.

10. The method according to any one of the preceding claims, in which the analysis comprises the analysis of at least one marker arranged on the object or in the object or a plurality of markers differing in at least one detectable luminescence property, wherein a plurality of markers of a mixture of markers can optionally also differ from one another with respect to their quantity ratio.

11. The method according to any one of the preceding claims, in which a printing ink comprising a fluorescence code has been applied to at least one of the provided objects before the provision, e.g. in white printing ink, e.g. in a partial area of a printing of a label or a shrink film of the object or as a direct printing of the object.

12. The method according to any one of the preceding claims, in which a label adhesive comprising a fluorescence code or a label lacquer comprising a fluorescence code has been applied to at least one of the provided objects before the provision.

13. The method according to any one of the preceding claims, in which a label or a shrink film which comprises a fluorescence code in its base material has been applied to the object before the provision.

14. The method according to any one of the preceding claims, in which the object is produced from a base material, for example from a plastic material, which comprises a material admixture comprising a fluorescence code, before the provision.

15. The method according to any one of the preceding claims, in which the analysis comprises the determination of an intensity for one or for a plurality of emission wavelengths of a spectrum and/or the determination of an intensity for one or for a plurality of emission wavelength ranges of the spectrum and/or the determination of an intensity ratio between a plurality of emission wavelengths or a plurality of emission wavelength ranges of the spectrum and/or the determination of the intensity of an emission spectrum and/or a dynamic emission behavior.

16. The method according to any one of the preceding claims, in which the analysis comprises the sequential passing of the separated objects through a tubular or tunnel-shaped detection module, on the inner wall of which at least one sensor for detecting the material property, such as an emitted spectrum, is arranged.

17. The method according to claim 16, in which the passing comprises the gravity-driven passing of the separated objects through the tunnel-shaped detection module.

18. The method according to any one of the preceding claims, in which the analysis of the separated objects comprises the analysis with a plurality of mutually independent detection modules, of which the analyzed objects are supplied to a separate sorter per detection module, wherein the sorters load the same plurality of transport devices according to the target address, and wherein the objects are each supplied to one of the target addresses by the transport devices.

19. The method according to any one of the preceding claims, in which the analysis, the comparison and the sorting of the separated objects are carried out repeatedly, wherein at least one first of the material properties of one of the separated objects is detected in a first analysis step and a first part of the target address is assigned after the comparison, wherein the separated object is supplied to the target address after the assignment via a transport system and/or at least one further material property different from the first is supplied to at least one further detection module for a further analysis step and a further part of the target address is assigned after the comparison, and wherein the object is supplied to the target address after the assignment of all parts of the target address.

## Revendications

1. Procédé de tri, qui comprend les étapes suivantes :
a. en option, mise à disposition d'une pluralité d'objets ;
b. individualisation des objets ;
c. analyse des objets individualisés, au moins une propriété de matériau étant détectée pour chacun des objets ;
d. comparaison de la ou des propriétés de matériau détectées avec des propriétés de matériau de référence enregistrées dans une base de données, auxquelles est respectivement associée une adresse destinataire, et détection d'une appartenance fractionnaire des objets ; et
e. tri des objets individualisés en fonction de leur(s) propriété(s) de matériau détectée(s) par le biais d'une adresse destinataire associée aux propriétés de matériau de référence dans la base de données ;
**caractérisé en ce que** l'analyse, la comparaison et le tri des objets individualisés sont effectués plusieurs fois, au moins une première propriété du matériau étant détectée dans une première étape d'analyse et au moins une propriété supplémentaire des propriétés du matériau étant détectée dans au moins une étape d'analyse supplémentaire, une première partie de l'adresse destinataire étant attribuée après la première étape d'analyse et une première étape de comparaison et au moins une partie supplémentaire de l'adresse destinataire après l'au moins une étape d'analyse supplémentaire et l'au moins une étape de comparaison supplémentaire, et l'objet étant acheminé à l'adresse destinataire après le passage de toutes les étapes d'analyse et étapes de comparaison et après l'attribution de toutes les parties de l'adresse destinataire.

2. Procédé de tri selon la revendication 1, avec lequel l'analyse comprend l'excitation électromagnétique d'un marqueur luminescent d'exactement l'un des objets individualisés, le marqueur présentant au moins un matériau qui, après l'excitation, émet avec au moins une longueur d'onde d'émission ou une pluralité de longueurs d'onde d'émission.

3. Procédé de tri selon la revendication 1, avec lequel l'analyse comprend l'excitation électromagnétique d'un marqueur luminescent, un matériau au marqueur présentant un matériau luminescent, par exemple un matériau fluorescent et/ou un matériau phosphorescent et/ou un convertisseur élévateur et/ou un convertisseur abaisseur.

4. Procédé de tri selon l'une des revendications précédentes, avec lequel l'analyse comprend la spectroscopie d'au moins un matériau luminescent des objets individualisés.

5. Procédé de tri selon l'une des revendications précédentes, avec lequel le tri des objets individualisés comprend l'adressage d'un moyen porteur d'un convoyeur auquel est associé exactement l'un des objets individualisés, après quoi l'objet individualisé est acheminé à l'adresse destinataire.

6. Procédé de tri selon l'une des revendications précédentes, avec lequel l'adressage comprend la commande d'une pluralité de moyens porteurs commandables indépendamment les uns des autres d'un convoyeur.

7. Procédé de tri selon l'une des revendications précédentes, avec lequel l'analyse
a) comprend la détection d'une propriété de matériau appliquée sur l'objet ou incorporée dans l'objet, par exemple la détection d'un code de fluorescence et/ou d'un filigrane et/ou d'un code RFA et/ou d'un code à barres et/ou d'un code QR et/ou d'un symbole et/ou d'un logo et/ou d'une marque figurative et/ou d'un numéro d'article ; et/ou
b) comprend la détection d'une propriété de matériau native de l'objet, par exemple une composition chimique du matériau de l'objet et/ou une couleur et/ou une forme de l'objet.

8. Procédé selon l'une des revendications précédentes, avec lequel l'adresse destinataire, liée par le biais de la propriété de matériau détectée de l'objet individualisé dans le moyen porteur et la propriété de matériau de référence, est attribuée, après la comparaison et avant le tri, à un moyen porteur du convoyeur auquel est associé exactement l'un des objets individualisés.

9. Procédé selon l'une des revendications précédentes, avec lequel, dans le cas où, lors de la comparaison de la propriété de matériau avec la propriété de matériau de référence stockée dans la base de données, aucune propriété de matériau de référence qui est identique à la propriété de matériau comparée n'est détectée, une adresse standard est attribuée à l'objet concerné lors du tri ou alors l'objet concerné est mis à disposition pour les nouvelles individualisation et analyse.

10. Procédé selon l'une des revendications précédentes, avec lequel l'analyse comprend l'analyse d'au moins un marqueur disposé sur l'objet ou dans l'objet ou de plusieurs marqueurs qui se différencient par au moins une propriété de luminescence détectable, plusieurs marqueurs d'un mélange de marqueurs pouvant, en option, également se distinguer les uns des autres du point de vue de leur proportion quantitative.

11. Procédé selon l'une des revendications précédentes, avec lequel une encre d'impression qui présente un code de fluorescence a été appliquée sur au moins l'un des objets mis à disposition avant la mise à disposition, par exemple dans une encre d'impression blanche, par exemple dans une zone partielle d'une impression d'une étiquette ou d'un film rétractable de l'objet ou sous la forme d'une impression directe de l'objet.

12. Procédé selon l'une des revendications précédentes, avec lequel un adhésif à étiquettes présentant un code de fluorescence ou un vernis à étiquette présentant un code de fluorescence a été appliqué sur au moins l'un des objets mis à disposition avant la mise à disposition.

13. Procédé selon l'une des revendications précédentes, avec lequel une étiquette ou un film rétractable, lequel présente un code de fluorescence dans son matériau de base, a été appliqué sur l'objet avant la mise à disposition.

14. Procédé selon l'une des revendications précédentes, avec lequel l'objet, avant la mise à disposition, est fabriqué à partir d'un matériau de base, par exemple à partir d'une matière plastique, qui présente un mélange de matériau présentant un code de fluorescence.

15. Procédé selon l'une des revendications précédentes, avec lequel l'analyse comprend la détermination d'une intensité pour une ou pour plusieurs longueurs d'onde d'émission d'un spectre et/ou la détermination d'une intensité pour une ou pour plusieurs plages de longueurs d'onde d'émission du spectre et/ou la détermination d'un rapport d'intensités entre plusieurs longueurs d'onde d'émission ou plusieurs plages de longueurs d'onde d'émission du spectre et/ou la détermination de l'intensité d'un spectre d'émission et/ou d'un comportement d'émission dynamique.

16. Procédé selon l'une des revendications précédentes, avec lequel l'analyse comprend le guidage traversant séquentiel des objets individualisés à travers un module de détection en forme de tube ou en forme de tunnel, sur la paroi intérieure duquel est disposé au moins un capteur pour la détection de la propriété de matériau, par exemple d'un spectre émis.

17. Procédé selon la revendication 16, avec lequel le guidage traversant comprend le guidage traversant entraîné par la gravité des objets individualisés à travers le module de détection en forme de tunnel.

18. Procédé selon l'une des revendications précédentes, avec lequel l'analyse des objets individualisés comprend l'analyse avec plusieurs modules de détection indépendants les uns des autres, depuis lesquels les objets analysés de chaque module de détection sont acheminés à un trieur séparé, les trieurs alimentant la même pluralité de dispositifs de transport conformément à l'adresse destinataire, et les objets étant acheminés des dispositifs de transport respectivement à l'une des adresses destinataires.

19. Procédé selon l'une des revendications précédentes, avec lequel l'analyse, la comparaison et le tri des objets individualisés sont effectués plusieurs fois, au moins une première des propriétés de matériau de l'un des objets individualisés étant détectée dans une première étape d'analyse et une première partie de l'adresse destinataire étant attribuée après la comparaison, l'objet individualisé étant acheminé à l'adresse destinataire par le biais d'un système de transport après l'attribution et/ou étant acheminé à au moins un module de détection supplémentaire pour une étape d'analyse supplémentaire d'au moins une propriété de matériau supplémentaire, différente de la première, et une partie supplémentaire de l'adresse destinataire étant associée après la comparaison, et l'objet étant acheminé à l'adresse destinataire après l'attribution de toutes les parties de l'adresse destinataire.
